# EUROPÄISCHE PATENTSCHRIFT

(11) **EP 3 974 236 B1**
(45) Veröffentlichungstag und Bekanntmachung des Hinweises auf die Patenterteilung: **20.12.2023**
(21) Anmeldenummer: 21195648.7
(22) Anmeldetag: 09.09.2021
(51) Int. Cl.: B60L 15/10, B61C 3/02, B60L 3/00, B60W 50/038

(54) **LEISTUNGSBEGRENZUNG FÜR SCHIENENFAHRZEUG MIT INTERNEM ENERGIESPEICHER**
POWER LIMITER FOR RAILWAY VEHICLE WITH INTERNAL ENERGY STORAGE
LIMITATION DE PUISSANCE POUR VÉHICULES FERROVIAIRES POURVUS D'ACCUMULATEUR D'ÉNERGIE INTERNE

(30) Priorität: 28.09.2020 DE 102020212157
(43) Veröffentlichungstag der Anmeldung: 30.03.2022
(73) Patentinhaber: Siemens Mobility GmbH, 81739 München (DE)
(72) Erfinder: Probst, Sebastian, 90408 Nürnberg (DE)
(74) Vertreter: Siemens Patent Attorneys

(56) Entgegenhaltungen:
- DE-A1-102017 122 989
- DE-A1-102017 215 352
- DE-T5-112009 000 114

## Beschreibung

Die Erfindung betrifft ein Schienenfahrzeug mit einem Antrieb, einem internen Energiespeicher und einem Antriebssteuergerät, ein Nachrüstset zum Nachrüsten eines Schienenfahrzeugs sowie Verfahren zum Betreiben und Nachrüsten eines Schienenfahrzeugs.

Schienenfahrzeuge mit einem internen Energiespeicher, beispielsweise in Form einer Batterie oder einer Brennstoffzelle, sollen möglichst große Reichweite erreichen können. Bei modernen Schienenfahrzeugen wird versucht, dieses Ziel durch intelligente Fahrzeugsteuerungssoftware und Fahrerassistenzsysteme, welche eine optimale Nutzung der begrenzt in dem Schienenfahrzeug gespeicherten Energie ermöglicht, zu erreichen.

Schwieriger ist hingegen, ein Altfahrzeug, das ausschließlich für einen Betrieb mit Energie eines externen Energieversorgungsnetzes ausgelegt worden ist und somit keinerlei Funktionalität bezüglich einer energiesparenden Fahrweise aufweist, auf den Betrieb mit einem internen Energiespeicher um- bzw. nachzurüsten. Die Technik bei Altfahrzeugen ist meist für eine Integration von intelligenten Fahrerassistenzsystemen ungeeignet, oder es wäre zumindest unwirtschaftlich, moderne Fahrerassistenzsysteme in solche Altfahrzeuge nachträglich einzubauen.

Aus dem Dokument DE 10 2017 122989 A1 ist ein Steuergerät für insbesondere ein Schienenfahrzeug mit Fahrhebel bekannt, mit einem Optimierer, welcher basierend auf einer Fahrhebelposition einen auf ein vorbestimmtes Optimierungsziel optimierten Leistungssollwert für ein Antriebssystem des Fahrzeugs bestimmt. Aus dem Dokument DE 11 2009 000114 T5 ist ein Steuerungssystem einer dynamoelektrischen Maschine bekannt, mit Drehmomentbegrenzungsmitteln zum Begrenzen des Drehmoments der Maschine derart, dass eine von einer Batterie zu liefernde Batterieleistung nicht eine Grenzleistung übersteigt.

Der Erfindung liegt die Aufgabe zugrunde, ein Schienenfahrzeug mit einem internen Energiespeicher anzugeben, das mittels weniger einfacher Komponenten einen energiesparenden Betrieb unterstützt.

Diese Aufgabe wird durch die jeweiligen Merkmale der unabhängigen Patentansprüche gelöst. Vorteilhafte Ausgestaltungen sind in jeweiligen abhängigen Patentansprüchen angegeben.

Danach ist erfindungsgemäß vorgesehen, dass in einem Führerstand des Schienenfahrzeugs ein Bedienelement angeordnet ist, mit dem fahrzeugführerseitig eine maximale Antriebsleistung des Antriebs bei Speisung des Antriebs mit elektrischer Energie des internen Energiespeichers für einen intern gespeisten Antriebsbetrieb einstellbar ist, wobei das Bedienelement eine die eingestellte maximale Antriebsleistung angebende Leistungsbegrenzungsinformation erzeugt, welche mittels eines Leistungsbegrenzungssignals übermittelt wird, und dass das Antriebssteuergerät ausgestaltet ist, die Antriebsleistung des Antriebs auf die eingestellte maximale Antriebsleistung zu begrenzen.

Ein wesentlicher Vorteil des erfindungsgemäßen Schienenfahrzeugs ist darin zu sehen, dass dieses zum Anregen einer energiesparenden Fahrweise des Schienenfahrzeugführers und damit zur Reduktion des Energieverbrauchs lediglich ein einfaches Bedienelement, das die Einstellung eines Leistungsbegrenzungssignals ermöglicht, sowie ein daran angepasstes Antriebssteuergerät, das die Verarbeitung des vom Bedienelement eingestellten Leistungsbegrenzungssignals ermöglicht, vorsieht. Antriebssteuergeräte in bereits in Betrieb befindlichen Altfahrzeugen lassen sich meist durch ein einfaches zusätzliches Softwaremodul mit wenig Aufwand entsprechend ergänzen bzw. von deren Funktion erweitern.

Ein weiterer wesentlicher Vorteil des erfindungsgemäß vorgesehenen Bedienelements in Kombination mit der erfindungsgemäß vorgesehenen Arbeitsweise des Antriebssteuergeräts ist darin zu sehen, dass die erfindungsgemäß vorgesehene Begrenzung der Antriebsleistung auf einen durch die Stellung des Bedienelements vorgegebenen maximalen Wert das Beschleunigungsvermögen des Schienenfahrzeugs beim Anfahren und bei geringen Geschwindigkeiten nicht negativ beeinträchtigt, sondern sich erst bei Erreichen einer gewissen Schwellengeschwindigkeit, die durch das Maß der Begrenzung der Antriebsleistung definiert wird, bemerkbar macht. Unterhalb dieser Schwellengeschwindigkeit ist der Einfluss der Antriebsleistungsbegrenzung nicht relevant, sodass die Leistungsbegrenzung die Fahreigenschaften des Schienenfahrzeugs nicht merklich verändert und somit die Akzeptanz der Leistungsbegrenzung bei den Fahrzeugführern erhöht.

Vorteilhaft ist die Berücksichtigung des Leistungsbegrenzungssignals auf den Fall einer Speisung des Antriebs mit Energie des internen Energiespeichers, also auf einen intern gespeisten Antriebsbetrieb, begrenzt. In einem Bremsbetrieb des Antriebs bleibt das Leistungsbegrenzungssignal hingegen vorzugsweise unberücksichtigt, sodass eine Rückspeisung von dem Antrieb generatorisch generierter elektrischer Energie insbesondere in den internen Energiespeicher unbegrenzt bleibt.

Das Bedienelement ermöglicht vorzugsweise zwei oder mehr Stellungen, die jeweils eine stellungsindividuelle maximale Antriebsleistung des Antriebs definieren und zur Erzeugung eines korrespondierenden Leistungsbegrenzungssignals führen.

Das Bedienelement sieht vorzugsweise eine Grundstellung vor, beispielsweise eine solche, in die es sich bei Vorliegen vorgegebener Randbedingungen, wie beispielsweise Inbetriebnahme oder Wiederinbetriebnahme, selbsttätig stellt. Die Grundstellung definiert dabei die kleinste der stellungsindividuellen maximalen Antriebsleistungen.

Erfindungsgemäß ist der Antrieb mit einem Stromabnehmer des Schienenfahrzeugs verbunden, der mit einem streckenseitigen Energieversorgungsnetz verbindbar ist zur Speisung des Antriebs mit elektrischer Energie des Energieversorgungsnetzes für einen netzgespeisten Antriebsbetrieb, und wird das Leistungsbegrenzungssignal ignoriert, wenn sich der Antrieb im netzgespeisten Antriebsbetrieb befindet.

Bei einer bevorzugten Ausführungsvariante ist vorgesehen, dass das Bedienelement unmittelbar mit dem Antriebssteuergerät signaltechnisch in Verbindung steht und das Leistungsbegrenzungssignal von dem Antriebssteuergerät verarbeitet wird.

Dabei ist es von Vorteil, dass dem Antriebssteuergerät außerdem ein Betriebsstatussignal zugeführt wird, das anzeigt, ob sich der Antrieb im intern gespeisten Antriebsbetrieb oder im netzgespeisten Antriebsbetrieb befindet, und eine Steuerlogik im Antriebssteuergerät das Leistungsbegrenzungssignal berücksichtigt und die Antriebsleistung des Antriebs auf die mittels des Bedienelements eingestellte maximale Antriebsleistung begrenzt, wenn das Betriebsstatussignal den intern gespeisten Antriebsbetrieb anzeigt, und das Leistungsbegrenzungssignal ignoriert, wenn das Betriebsstatussignal den netzgespeisten Antriebsbetrieb anzeigt.

Bei einer anderen, alternativen Ausführungsvariante ist hingegen vorgesehen, dass dem Antriebssteuergerät ein zentrales Steuergerät des Schienenfahrzeugs vorgeordnet ist. Das Bedienelement steht dabei mit dem zentralen Steuergerät signaltechnisch in Verbindung und das Leistungsbegrenzungssignal wird von dem zentralen Steuergerät verarbeitet. Eine Steuerlogik im zentralen Steuergerät leitet das Leistungsbegrenzungssignal bzw. die mit diesem übermittelte Leistungsbegrenzungsinformation zu dem Antriebssteuergerät weiter, wenn ein dem zentralen Steuergerät zugeführtes Betriebsstatussignal den intern gespeisten Antriebsbetrieb anzeigt, und blockiert vorzugsweise die Weiterleitung des Leistungsbegrenzungssignals bzw. der mit diesem übermittelten Leistungsbegrenzungsinformation, wenn das Betriebsstatussignal den netzgespeisten Antriebsbetrieb anzeigt.

Das Antriebssteuergerät bzw. das zentrale Steuergerät, sofern vorhanden, ist vorzugsweise derart ausgestaltet, dass in einem Bremsbetrieb des Antriebs das Leistungsbegrenzungssignal unberücksichtigt bleibt und damit die Rückspeisung von Bremsleistung unbegrenzt bleibt.

Erfindungsgemäß ist ferner ein Nachrüstset zum Nachrüsten eines Schienenfahrzeugs vorgesehen, das mit einem Antrieb, einem internen Energiespeicher und einem Antriebssteuergerät ausgestattet ist, wobei der Antrieb mit einem Stromabnehmer des Schienenfahrzeugs verbunden ist, der mit einem streckenseitigen Energieversorgungsnetz verbindbar ist zur Speisung des Antriebs mit elektrischer Energie des Energieversorgungsnetzes für einen netzgespeisten Antriebsbetrieb. Das Nachrüstset umfasst dabei ein Bedienelement, das zur Montage in einem Führerstand des Schienenfahrzeugs geeignet ist und eine Einstellung einer maximalen Antriebsleistung ermöglicht, wobei von dem Bedienelement eine die eingestellte maximale Antriebsleistung angebende Leistungsbegrenzungsinformation erzeugt wird, welche mittels eines Leistungsbegrenzungssignals übermittelbar ist, und ein Steuerlogikmodul, das zur Integration in dem Antriebssteuergerät oder in einem mit dem Antriebssteuergerät in Verbindung stehenden zentralen Steuergerät des Schienenfahrzeugs ausgestaltet ist und im Betrieb das Leistungsbegrenzungssignal oder die mit diesem übermittelte Leistungsbegrenzungsinformation bei der Steuerung des Antriebs berücksichtigt oder zwecks Berücksichtigung zu dem Antriebssteuergerät weiterleitet, wenn ein dem Steuerlogikmodul ebenfalls zugeführtes Betriebsstatussignal einen intern gespeisten Antriebsbetrieb anzeigt, das Steuerlogikmodul die Berücksichtigung oder Weiterleitung des Leistungsbegrenzungssignals bzw. der mit diesem übermittelten Leistungsbegrenzungsinformation blockiert, wenn das Betriebsstatussignal einen netzgespeisten Antriebsbetrieb anzeigt.

Die Erfindung betrifft ferner ein Verfahren zum Betreiben eines Schienenfahrzeugs, das mit einem Antrieb, einem internen Energiespeicher und einem Antriebssteuergerät ausgestattet ist. Erfindungsgemäß ist vorgesehen, dass im Führerstand des Schienenfahrzeugs ein Bedienelement angeordnet ist, mit dem in Abhängigkeit von einer fahrzeugführerseitig eingestellten Stellung eine maximale Antriebsleistung des Antriebs einstellbar ist, wobei das Bedienelement eine die eingestellte maximale Antriebsleistung angebende Leistungsbegrenzungsinformation erzeugt, welche mittels eines Leistungsbegrenzungssignals übermittelt wird, und von dem Antriebssteuergerät die Antriebsleistung des Antriebs auf die eingestellte maximale Antriebsleistung begrenzt wird, sofern der Antrieb mit elektrischer Energie des internen Energiespeichers gespeist wird, der Antrieb mit einem Stromabnehmer des Schienenfahrzeugs verbunden ist, der mit einem streckenseitigen Energieversorgungsnetz verbindbar ist zur Speisung des Antriebs mit elektrischer Energie des Energieversorgungsnetzes für einen netzgespeisten Antriebsbetrieb, und das Leistungsbegrenzungssignal ignoriert wird, wenn sich der Antrieb im netzgespeisten Antriebsbetrieb befindet.

Die Erfindung betrifft schließlich ein Verfahren zum Nachrüsten eines Schienenfahrzeugs, das mit einem Antrieb, einem internen Energiespeicher und einem Antriebssteuergerät ausgestattet ist, wobei der Antrieb mit einem Stromabnehmer des Schienenfahrzeugs verbunden ist, der mit einem streckenseitigen Energieversorgungsnetz verbindbar ist zur Speisung des Antriebs mit elektrischer Energie des Energieversorgungsnetzes für einen netzgespeisten Antriebsbetrieb. Dabei ist vorgesehen, dass ein Bedienelement in einem Führerstand des Schienenfahrzeugs montiert wird, mit dem in Abhängigkeit von einer fahrzeugführerseitig eingestellten Stellung eine maximale Antriebsleistung des Antriebs einstellbar ist, wobei das Bedienelement eine die eingestellte maximale Antriebsleistung angebende Leistungsbegrenzungsinformation erzeugt, welche mittels eines Leistungsbegrenzungssignals übermittelt wird, das Bedienelement signaltechnisch mit einem Antriebssteuergerät oder einem zentralen Steuergerät des Schienenfahrzeugs verbunden wird und in dem Antriebssteuergerät oder dem zentralen Steuergerät ein Steuerlogikmodul integriert wird, das im Betrieb das Leistungsbegrenzungssignal bzw. die mit diesem übermittelte Leistungsbegrenzungsinformation bei der Antriebssteuerung berücksichtigt oder zwecks Berücksichtigung bei der Antriebssteuerung weiterleitet, wenn ein Betriebsstatussignal einen intern gespeisten Antriebsbetrieb anzeigt, und das Steuerlogikmodul die Berücksichtigung oder Weiterleitung des Leistungsbegrenzungssignals bzw. der mit diesem übermittelten Leistungsbegrenzungsinformation blockiert, wenn das Betriebsstatussignal einen netzgespeisten Antriebsbetrieb anzeigt.

Die Erfindung wird nachfolgend anhand von Ausführungsbeispielen näher erläutert; dabei zeigen beispielhaft
- Figur 1: ein Ausführungsbeispiel für ein Schienenfahrzeug ohne erfindungsgemäß vorgesehenes Bedienelement bzw. Nachrüstset,
- Figur 2: das Schienenfahrzeug gemäß Figur 1 nach einer Nachrüstung mit einem Ausführungsbeispiel für ein erfindungsgemäßes Nachrüstset,
- Figur 3: Fahrverläufe zur beispielhaften Erläuterung des Einflusses des Nachrüstsets bei dem Schienenfahrzeug gemäß Figur 2, und
- Fig. 4-6: weitere Ausführungsbeispiele für erfindungsgemäße Schienenfahrzeuge.

In den Figuren werden der Übersicht halber für identische oder vergleichbare Komponenten stets dieselben Bezugszeichen verwendet.

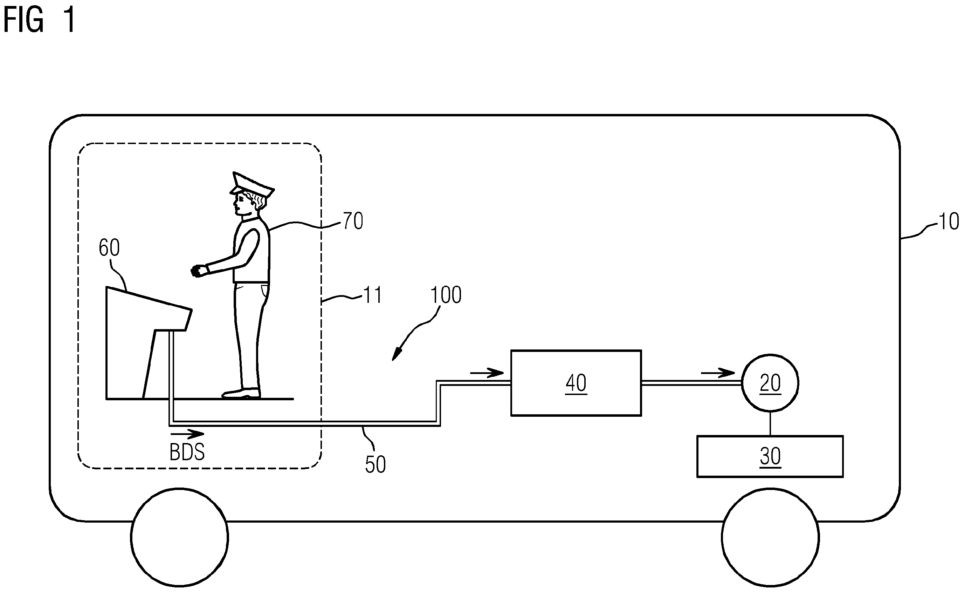

Die Figur 1 zeigt zur allgemeinen Erläuterung ein Ausführungsbeispiel für ein Schienenfahrzeug 10, das mit noch keinem erfindungsgemäßen Nachrüstset ausgestattet ist oder mit einem solchen nachgerüstet wurde.

Das Schienenfahrzeug 10 umfasst unter anderem einen Antrieb 20, der von einem internen Energiespeicher 30 mit Antriebsenergie versorgt werden kann. Zur Ansteuerung des Antriebs 20 ist ein Antriebssteuergerät 40 vorhanden, das über eine Datenverbindung 50 mit einem Bedienpult 60 in Verbindung steht. Das Bedienpult 60 befindet sich in einem Führerstand 11 des Schienenfahrzeugs 10 und weist eine Vielzahl an Bedienkomponenten auf, die aus Gründen der Übersicht in der Figur 1 nicht näher gezeigt sind und eine Steuerung des Fahrzeugs mittels Bediensignalen BDS erlauben, insbesondere ein Beschleunigen, Bremsen, Rollen oder Halten der Geschwindigkeit bewirken können.

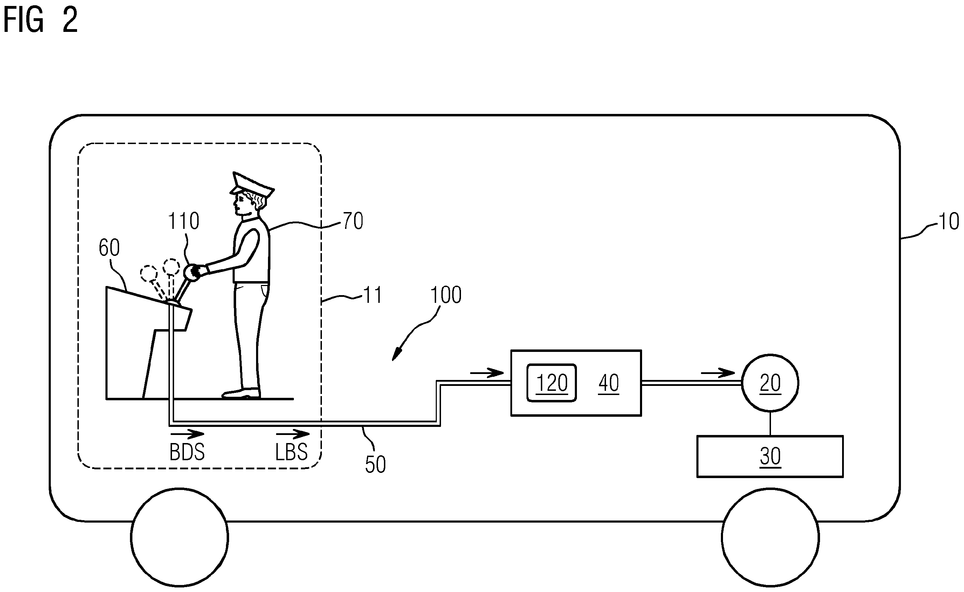

Die Figur 2 zeigt das Schienenfahrzeug 10 gemäß Figur 1, nachdem dieses mit einem Ausführungsbeispiel für ein erfindungsgemäßes Nachrüstset 100 zum Nachrüsten des Schienenfahrzeugs 10 gemäß Figur 1 ausgestattet worden ist. Das Nachrüstset 100 umfasst ein Bedienelement in Form eines verstellbaren Bedienhebels 110 sowie ein Steuerlogikmodul 120, das im Antriebssteuergerät 40 in Form eines Softwaremoduls integriert ist.

Zur Verbindung zwischen dem Bedienhebel 110 und dem Steuerlogikmodul 120 kann die Datenverbindung 50 zwischen dem Bedienpult 60 und dem Antriebssteuergerät 40 herangezogen werden; alternativ kann eine separate bzw. zusätzliche Datenverbindung vorgesehen werden, die kabelgebunden oder kabellos sein kann und/oder polfreie Kontakte umfassen kann und/oder beispielsweise einen Bestandteil des Nachrüstsets 100 bilden kann.

Der Bedienhebel 110 ermöglicht einem im Führerstand 11 des Schienenfahrzeugs 10 befindlichen Fahrzeugführer 70 die Einstellung eines Leistungsbegrenzungssignals LBS, das eine maximale Antriebsleistung des Antriebs 20 definiert. Das Antriebssteuergerät 40 ist durch die Integration des Steuerlogikmoduls 120 bzw. die nachträgliche Programmierung durch das Steuerlogikmodul 120 nachträglich derart nachgerüstet worden, dass es die Antriebsleistung des Antriebs 20 auf die im Leistungsbegrenzungssignal LBS festgelegte maximale Antriebsleistung begrenzen kann.

Das Antriebssteuergerät 40 wird dabei eine Leistungsbegrenzung nur für den Antriebsfall bewirken, also dann, wenn Antriebsenergie aus dem internen Energiespeicher 30 entnommen und zum Antreiben des Antriebs 20 verwendet wird; befindet sich das Schienenfahrzeug 10 im Bremsbetrieb und speist der Antrieb 20 Energie in den internen Energiespeicher 30 zurück, so wird von dem Antriebssteuergerät 40 keine Leistungsbegrenzung erzwungen; mit anderen Worten wird im Bremsbetrieb also das Leistungsbegrenzungssignal LBS vorzugsweise ignoriert.

Der Bedienhebel 110 ermöglicht zwei oder mehr Stellungen, beispielsweise - wie in Figur 2 gezeigt - drei Stellungen, von denen jeweils zumindest zwei eine stellungsindividuelle maximale Antriebsleistung des Antriebs 20 definieren und zur Erzeugung eines korrespondierenden Leistungsbegrenzungssignals LBS führen. Vorteilhaft ist es, wenn der Bedienhebel 110 eine erste Stellung, nachfolgend Grundstellung genannt, vorsieht, in die es sich beispielsweise nach Inbetriebnahme bzw. Wiederinbetriebnahme des Schienenfahrzeugs 10 vorzugsweise selbsttätig stellt. In dieser Grundstellung definiert der Bedienhebel 110 vorzugsweise die kleinste maximale Antriebsleistung und somit einen Fahrmodus, den man als "ECO-Modus" bezeichnen kann.

In der zweiten Stellung, die man beispielsweise als "Normalfahrmodus" bezeichnen kann, definiert der Bedienhebel 110 eine größere maximale Antriebsleistung als in der ersten Stellung; in der dritten Stellung, die man beispielsweise als "Freie-Fahrt-Modus" bezeichnen kann, definiert der Bedienhebel 110 eine noch größere maximale Antriebsleistung oder beschränkt die Antriebsleistung gar nicht.

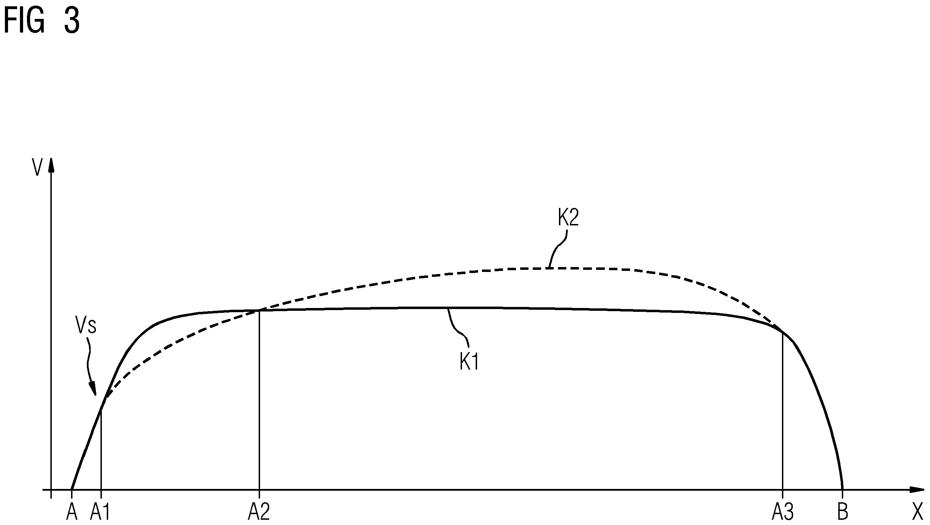

Die Figur 3 zeigt den Einfluss des Nachrüstsets 100 bzw. den Einfluss der Stellung des Bedienhebels 110 auf das Fahrverhalten des Schienenfahrzeugs 10 anhand eines Fahrbeispiels für eine Fahrt zwischen einem Startpunkt A und einem Zielpunkt B; X bezeichnet den Ort des Schienenfahrzeugs und V dessen Geschwindigkeit.

Die Kurve K1 in Figur 3 visualisiert beispielhaft eine Fahrweise ohne eine erzwungene Beschränkung der Antriebsleistung, wie sie beispielsweise die dritte Stellung des Bedienhebels 110 erlauben kann. Es lässt sich erkennen, dass das Schienenfahrzeug 10 bei der gezeigten Fahrweise zügig auf eine gewünschte Geschwindigkeit beschleunigt und diese konstant hält, bis vor Erreichen des Zielpunktes B ein Abbremsen erfolgt.

Die Kurve K2 in Figur 3 zeigt zum Vergleich eine energiesparende Fahrweise, die durch die Grundstellung des Bedienhebels 110 hervorgerufen wird. Es lässt sich erkennen, dass bei Erreichen der durch die Grundstellung des Bedienhebels 110 vorgesehenen maximalen Antriebsleistung bzw. bei Erreichen einer dazu korrespondierenden Schwellengeschwindigkeit Vs die Beschleunigung gegenüber dem nichtleistungsbegrenzten Betrieb Kurve K1 reduziert wird; bis zum Erreichen dieser Schwellengeschwindigkeit Vs wirkt sich die Leistungsbegrenzung noch nicht aus. So zeigt die Figur 3, dass nach Erreichen der Schwellengeschwindigkeit Vs in einem Streckenabschnitt zwischen den Punkten A1 und A2 das Schienenfahrzeug 10 aufgrund der Leistungsbegrenzung langsamer beschleunigt wird, als dies bei der Fahrweise gemäß der Kurve K1 bzw. ohne die Leistungsbegrenzung der Fall ist. Um dabei dennoch eine rechtzeitige fahrplanmäßige Ankunft des Schienenfahrzeugs 10 am Zielpunkt B zu gewährleisten, muss das Schienenfahrzeug 10 im Streckenbereich zwischen den Punkten A2 und A3 somit schneller fahren bzw. eine höhere Maximalgeschwindigkeit erreichen, um den Zeitverlust im Streckenabschnitt zwischen den Punkten A1 und A2 auszugleichen.

In der Summe ergibt sich durch die Reduktion der Antriebsleistung bzw. aufgrund des Einflusses des Bedienhebels 110 eine Energieersparnis, ohne dass eine Einbuße hinsichtlich des Einhaltens von Fahrplänen zu befürchten wäre, weil beide Kurven K1 und K2 eine rechtzeitige Ankunft am Zielpunkt B erlauben.

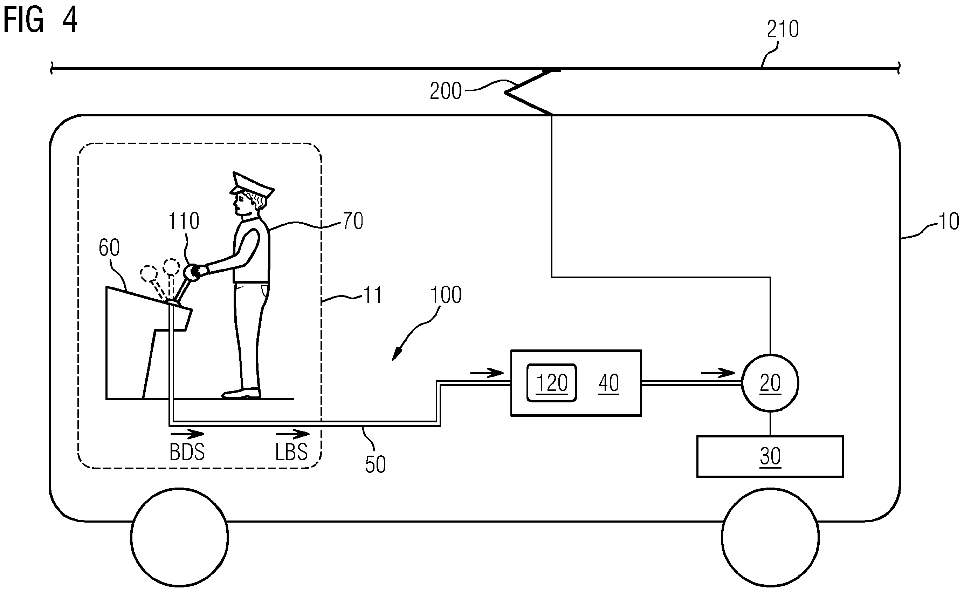

Die Figur 4 zeigt eine Ausführungsvariante des Ausführungsbeispiels gemäß Figur 2. Bei der Ausführungsvariante gemäß Figur 4 ist das Schienenfahrzeug 10 zusätzlich mit einem Stromabnehmer 200 ausgestattet, der einen netzgespeisten Antriebsbetrieb des Antriebs 20 ermöglicht. Im netzgespeisten Antriebsbetrieb wird die Energie zum Antreiben des Antriebs 20 aus einem an den Stromabnehmer 20 angeschlossenen streckenseitigen Energieversorgungsnetz 210 entnommen.

Das Antriebssteuergerät 40 bzw. das in diesem integrierte Steuerlogikmodul 120 sind dabei derart ausgebildet, dass das Leistungsbegrenzungssignal LBS, das von dem Bedienhebel 110 eingestellt wird, nicht nur unberücksichtigt bleibt, wenn der Antrieb im Bremsbetrieb bzw. im Rekuperationsmodus arbeitet, sondern auch dann, wenn sich der Antrieb 20 im netzgespeisten Antriebsbetrieb befindet. Bei Netzspeisung des Antriebs 20 kommt es nämlich auf eine besonders energiesparende Fahrweise nicht an, sodass dem Schienenfahrzeugführer 70 ein größerer Entscheidungsspielraum bezüglich der geeigneten Fahrweise gegeben werden kann als im Falle eines internen Speisebetriebs über den internen Energiespeicher 30.

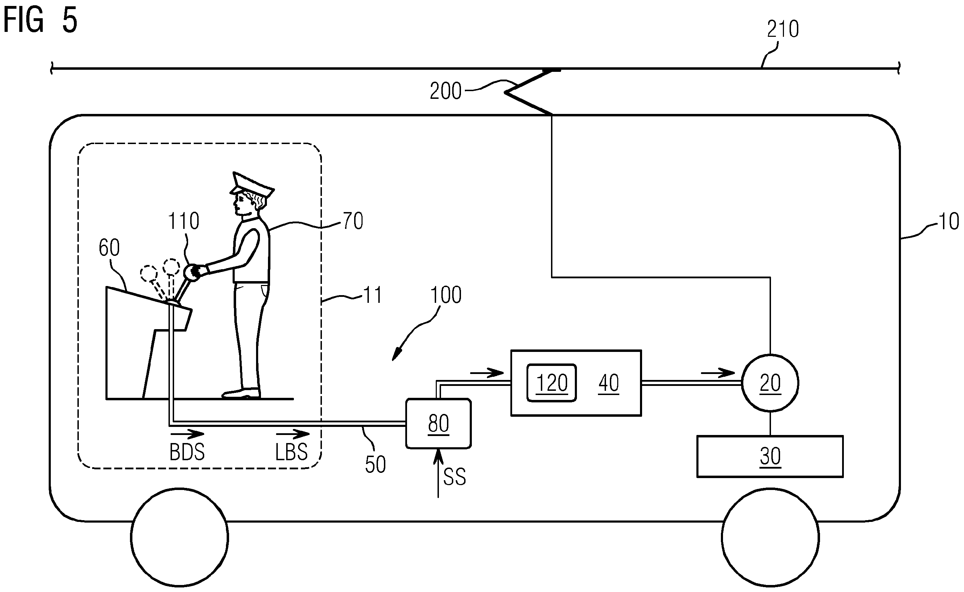

Die Figur 5 zeigt eine andere Ausführungsvariante des Ausführungsbeispiels gemäß Figur 2. Bei der Ausführungsvariante gemäß Figur 5 ist der Bedienhebel 110 nicht unmittelbar mit dem Antriebssteuergerät 40 verbunden, sondern stattdessen nur mittelbar über ein zwischengeschaltetes zentrales Steuergerät 80, das auch das Bedienpult 60 mit dem Antriebssteuergerät 40 verbindet. Die Verbindung zwischen dem Bedienpult 60 und dem Bedienhebel 110 einerseits und dem zentralen Steuergerät 80 andererseits kann beispielsweise auf einer Datenverbindung 50 in Form eines internen Zugbusses, auf Funkverbindungen oder auf anderen Arten an Signalverbindungen basieren.

Das Steuerlogikmodul 120 des Nachrüstsets 100 ist bei dem Ausführungsbeispiel gemäß Figur 5 im zentralen Steuergerät 80 implementiert. Das Steuerlogikmodul 120 wird dabei die von dem Bedienhebel 110 im Leistungsbegrenzungssignal LBS enthaltene Leistungsbegrenzungsinformation ausschließlich dann berücksichtigen bzw. zum Antriebssteuergerät 40 weiterleiten, wenn ein Betriebsstatussignal SS einen intern gespeisten Antriebsbetrieb, also eine Speisung des Antriebs 20 durch den internen Energiespeicher 30, anzeigt.

Anderenfalls, wenn also das Betriebsstatussignal SS einen netzgespeisten Antriebsbetrieb oder aber aufgrund eines Bremsbetriebs eine Rückspeisung von Energie vom Antrieb 20 in Richtung des internen Energiespeichers 30 oder des Energieversorgungsnetzes 210 anzeigt, wird das zentrale Steuergerät 80 das Leistungsbegrenzungssignal LBS ignorieren bzw. blockieren, sodass dieses keinen Einfluss auf das Antriebssteuergerät 40 und das Fahrverhalten des Schienenfahrzeugs 10, also konkret keinen Einfluss auf die dem Schienenfahrzeugführer 70 zur Verfügung stehende Antriebsleistung hat. Im Übrigen gelten die obigen Ausführungen im Zusammenhang mit den Figuren 1 bis 4 bei dem Ausführungsbeispiel gemäß 5 entsprechend.

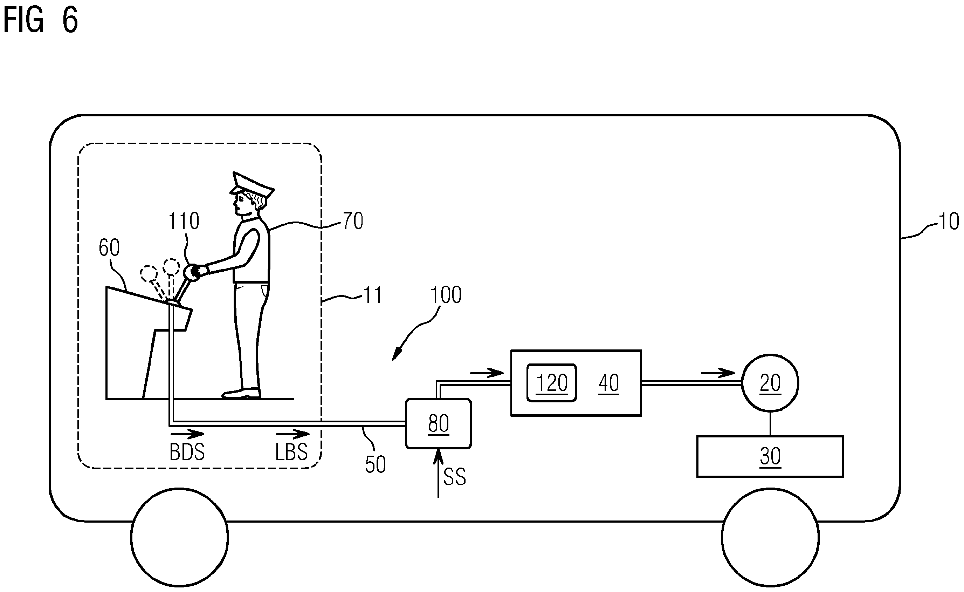

Die Figur 6 zeigt eine Ausführungsvariante des Ausführungsbeispiels gemäß Figur 5. Im Unterschied zum Ausführungsbeispiel gemäß Figur 5 fehlt es bei dem Schienenfahrzeug gemäß Figur 6 an einem Stromabnehmer 200 und somit an der Möglichkeit einer Energieeinspeisung seitens eines externen Energieversorgungsnetzes. Aus diesem Grunde wird das Steuerlogikmodul 120 die Stellung des Bedienhebels 110 stets dann berücksichtigen, wenn das Betriebsstatussignal SS anzeigt, dass das Schienenfahrzeug 10 aktiv angetrieben wird.

Anderenfalls, wenn das Betriebsstatussignal SS einen Bremsbetrieb und eine Rückspeisung von Energie vom Antrieb 20 in Richtung des internen Energiespeichers 30 anzeigt, wird das zentrale Steuergerät 80 das Leistungsbegrenzungssignal LBS ignorieren bzw. blockieren, sodass dieses keinen Einfluss auf das Antriebssteuergerät 40 hat. Im Übrigen gelten die obigen Ausführungen im Zusammenhang mit den Figuren 1 bis 5 bei dem Ausführungsbeispiel gemäß 6 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Schienenfahrzeug (10) mit einem Antrieb (20), einem internen Energiespeicher (30) und einem Antriebssteuergerät (40), wobei
- in einem Führerstand (11) des Schienenfahrzeugs (10) ein Bedienelement (110) angeordnet ist, mit dem fahrzeugführerseitig eine maximale Antriebsleistung des Antriebs (20) bei Speisung des Antriebs (20) mit elektrischer Energie des internen Energiespeichers (30) für einen intern gespeisten Antriebsbetrieb einstellbar ist, wobei das Bedienelement (110) eine die eingestellte maximale Antriebsleistung angebende Leistungsbegrenzungsinformation erzeugt, welche mittels eines Leistungsbegrenzungssignals (LBS) übermittelt wird,
- das Antriebssteuergerät (40) ausgestaltet ist, die Antriebsleistung des Antriebs (20) auf die eingestellte maximale Antriebsleistung zu begrenzen,
- der Antrieb (20) mit einem Stromabnehmer (200) des Schienenfahrzeugs (10) verbunden ist, der mit einem streckenseitigen Energieversorgungsnetz (210) verbindbar ist zur Speisung des Antriebs (20) mit elektrischer Energie des Energieversorgungsnetzes (210) für einen netzgespeisten Antriebsbetrieb, und
- das Leistungsbegrenzungssignal (LBS) ignoriert wird, wenn sich der Antrieb (20) im netzgespeisten Antriebsbetrieb befindet.

2. Schienenfahrzeug (10) nach Anspruch 1,
**dadurch gekennzeichnet, dass**
das Bedienelement (110) mehrere mögliche Stellungen umfasst, wobei jede Stellung eine stellungsindividuelle maximale Antriebsleistung des Antriebs (20) definiert.

3. Schienenfahrzeug (10) nach Anspruch 2,
**dadurch gekennzeichnet, dass**
das Bedienelement (110) eine Grundstellung vorsieht, wobei die Grundstellung von den stellungsindividuellen maximalen Antriebsleistungen die kleinste maximale Antriebsleistung definiert.

4. Schienenfahrzeug (10) nach Anspruch 1,
**dadurch gekennzeichnet, dass**
- das Bedienelement (110) unmittelbar mit dem Antriebssteuergerät (40) signaltechnisch in Verbindung steht und das Leistungsbegrenzungssignal (LBS) von dem Antriebssteuergerät (40) verarbeitet wird,
- dem Antriebssteuergerät (40) außerdem ein Betriebsstatussignal (SS) zugeführt wird, das anzeigt, ob sich der Antrieb (20) im intern gespeisten Antriebsbetrieb oder im netzgespeisten Antriebsbetrieb befindet, und
- eine Steuerlogik im Antriebssteuergerät (40) das Leistungsbegrenzungssignal (LBS) berücksichtigt und die Antriebsleistung des Antriebs (20) auf die eingestellte maximale Antriebsleistung begrenzt, wenn das Betriebsstatussignal (SS) den intern gespeisten Antriebsbetrieb anzeigt, und das Leistungsbegrenzungssignal (LBS) ignoriert, wenn das Betriebsstatussignal (SS) den netzgespeisten Antriebsbetrieb anzeigt.

5. Schienenfahrzeug (10) nach Anspruch 1,
**dadurch gekennzeichnet, dass**
- dem Antriebssteuergerät (40) ein zentrales Steuergerät (80) des Schienenfahrzeugs (10) vorgeordnet ist,
- das Bedienelement (110) mit dem zentralen Steuergerät (80) signaltechnisch in Verbindung steht und das Leistungsbegrenzungssignal (LBS) von dem zentralen Steuergerät (80) verarbeitet wird, und
- eine Steuerlogik im zentralen Steuergerät (80) das Leistungsbegrenzungssignal (LBS) zu dem Antriebssteuergerät (40) weiterleitet, wenn ein dem zentralen Steuergerät (80) zugeführtes Betriebsstatussignal (SS) den intern gespeisten Antriebsbetrieb anzeigt, und die Weiterleitung des Leistungsbegrenzungssignals (LBS) blockiert, wenn das Betriebsstatussignal (SS) den netzgespeisten Antriebsbetrieb anzeigt.

6. Schienenfahrzeug (10) nach einem der voranstehenden Ansprüche,
**dadurch gekennzeichnet, dass**
in einem Bremsbetrieb des Antriebs (20) das Leistungsbegrenzungssignal (LBS) unberücksichtigt bleibt.

7. Nachrüstset (100) zum Nachrüsten eines Schienenfahrzeugs (10), das mit einem Antrieb (20), einem internen Energiespeicher (30) und einem Antriebssteuergerät (40) ausgestattet ist, wobei der Antrieb (20) mit einem Stromabnehmer (200) des Schienenfahrzeugs (10) verbunden ist, der mit einem streckenseitigen Energieversorgungsnetz (210) verbindbar ist zur Speisung des Antriebs (20) mit elektrischer Energie des Energieversorgungsnetzes (210) für einen netzgespeisten Antriebsbetrieb,
wobei das Nachrüstset (100) umfasst:
- ein Bedienelement (110), das zur Montage in einem Führerstand (11) des Schienenfahrzeugs (10) geeignet ist und eine Einstellung einer maximalen Antriebsleistung ermöglicht, wobei von dem Bedienelement (110) eine die eingestellte maximale Antriebsleistung angebende Leistungsbegrenzungsinformation erzeugt wird, welche mittels eines Leistungsbegrenzungssignals (LBS) übermittelbar ist, und
- ein Steuerlogikmodul (120), das zur Integration in dem Antriebssteuergerät (40) oder in einem mit dem Antriebssteuergerät (40) in Verbindung stehenden zentralen Steuergerät (80) des Schienenfahrzeugs (10) ausgestaltet ist und im Betrieb das Leistungsbegrenzungssignal (LBS) bei der Steuerung des Antriebs (20) berücksichtigt oder zwecks Berücksichtigung zu dem Antriebssteuergerät (40) weiterleitet, wenn ein dem Steuerlogikmodul (120) ebenfalls zugeführtes Betriebsstatussignal (SS) einen intern gespeisten Antriebsbetrieb anzeigt, das Steuerlogikmodul (120) die Berücksichtigung oder Weiterleitung des Leistungsbegrenzungssignals (LBS) blockiert, wenn das Betriebsstatussignal (SS) einen netzgespeisten Antriebsbetrieb anzeigt.

8. Verfahren zum Betreiben eines Schienenfahrzeugs (10), das mit einem Antrieb (20), einem internen Energiespeicher (30) und einem Antriebssteuergerät (40) ausgestattet ist, wobei
- in einem Führerstand (11) des Schienenfahrzeugs (10) ein Bedienelement (110) angeordnet ist, mit dem in Abhängigkeit von einer fahrzeugführerseitig eingestellten Stellung eine maximale Antriebsleistung des Antriebs (20) einstellbar ist, wobei das Bedienelement (110) eine die eingestellte maximale Antriebsleistung angebende Leistungsbegrenzungsinformation erzeugt, welche mittels eines Leistungsbegrenzungssignals (LBS) übermittelt wird, und
- von dem Antriebssteuergerät (40) die Antriebsleistung des Antriebs (20) auf eingestellte maximale Antriebsleistung begrenzt wird, sofern der Antrieb (20) mit elektrischer Energie des internen Energiespeichers (30) gespeist wird,
- der Antrieb (20) mit einem Stromabnehmer (200) des Schienenfahrzeugs (10) verbunden ist, der mit einem streckenseitigen Energieversorgungsnetz (210) verbindbar ist zur Speisung des Antriebs (20) mit elektrischer Energie des Energieversorgungsnetzes (210) für einen netzgespeisten Antriebsbetrieb, und
- das Leistungsbegrenzungssignal (LBS) ignoriert wird, wenn sich der Antrieb (20) im netzgespeisten Antriebsbetrieb befindet.

9. Verfahren zum Nachrüsten eines Schienenfahrzeugs (10), das mit einem Antrieb (20), einem internen Energiespeicher (30) und einem Antriebssteuergerät (40) ausgestattet ist, wobei der Antrieb (20) mit einem Stromabnehmer (200) des Schienenfahrzeugs (10) verbunden ist, der mit einem streckenseitigen Energieversorgungsnetz (210) verbindbar ist zur Speisung des Antriebs (20) mit elektrischer Energie des Energieversorgungsnetzes (210) für einen netzgespeisten Antriebsbetrieb, wobei
- ein Bedienelement (110) in einem Führerstand (11) des Schienenfahrzeugs (10) montiert wird, mit dem in Abhängigkeit von einer fahrzeugführerseitig eingestellten Stellung eine maximale Antriebsleistung des Antriebs (20) einstellbar ist, wobei das Bedienelement (110) eine die eingestellte maximale Antriebsleistung angebende Leistungsbegrenzungsinformation erzeugt, welche mittels eines Leistungsbegrenzungssignals (LBS) übermittelt wird,
- das Bedienelement (110) signaltechnisch mit dem Antriebssteuergerät (40) oder einem zentralen Steuergerät (80) des Schienenfahrzeugs (10) verbunden wird, und
- in dem Antriebssteuergerät (40) oder dem zentralen Steuergerät (80) ein Steuerlogikmodul (120) integriert wird, das im Betrieb das Leistungsbegrenzungssignal (LBS) bei der Antriebssteuerung berücksichtigt oder zwecks Berücksichtigung bei der Antriebssteuerung weiterleitet, wenn ein Betriebsstatussignal (SS) einen intern gespeisten Antriebsbetrieb anzeigt, und das Steuerlogikmodul (120) die Berücksichtigung oder Weiterleitung des Leistungsbegrenzungssignals (LBS) blockiert, wenn das Betriebsstatussignal (SS) einen netzgespeisten Antriebsbetrieb anzeigt.

## Claims

1. Rail vehicle (10) with a drive (20), an internal energy storage unit (30) and a drive control device (40), wherein
- arranged in a driver's cab (11) of the rail vehicle (10) is an operating element (110), with which a maximum drive performance of the drive (20) can be set on the vehicle driver side when the drive (20) is fed with electrical energy of the internal energy storage unit (30) for internally fed drive operation, wherein the operating element (110) generates an item of performance limitation information indicating the maximum drive performance that has been set, which is transmitted by means of a performance limitation signal (LBS),
- the drive control device (40) is embodied to limit the drive performance of the drive (20) to the maximum drive performance that has been set,
- the drive (20) is connected to a current collector (200) of the rail vehicle (10), which can be connected to a trackside energy supply network (210) for feeding the drive (20) with electrical energy of the energy supply network (210) for network-fed drive operation, and
- the performance limitation signal (LBS) is ignored when the drive (20) is in network-fed drive operation.

2. Rail vehicle (10) according to claim 1,
**characterised in that**
the operating element (110) comprises a plurality of possible positions, wherein each position defines a maximum drive performance of the drive (20) that is individual to the position.

3. Rail vehicle (10) according to claim 2,
**characterised in that**
the operating element (110) provides a basic position, wherein the basic position defines the smallest maximum drive performance of the maximum drive performances that are individual to the positions.

4. Rail vehicle (10) according to claim 1,
**characterised in that**
- the operating element (110) is directly connected to the drive control device (40) from a signal perspective and the performance limitation signal (LBS) is processed by the drive control device (40),
- the drive control device (40) is additionally supplied with an operating status signal (SS), which indicates whether the drive (20) is in internally fed drive operation or in network-fed drive operation, and
- a control logic in the drive control device (40) takes into consideration the performance limitation signal (LBS) and limits the drive performance of the drive (20) to the maximum drive performance that has been set when the operating status signal (SS) indicates internally fed drive operation, and ignores the performance limitation signal (LBS) when the operating status signal (SS) indicates network-fed drive operation.

5. Rail vehicle (10) according to claim 1,
**characterised in that**
- a central control device (80) of the rail vehicle (10) is superordinate to the drive control device (40),
- the operating element (110) is connected to the central control device (80) from a signal perspective and the performance limitation signal (LBS) is processed by the central control device (80), and
- a control logic in the central control device (80) forwards the performance limitation signal (LBS) to the drive control device (40) when an operating status signal (SS) supplied to the central control device (80) indicates internally fed drive operation, and blocks the forwarding of the performance limitation signal (LBS) when the operating status signal (SS) indicates network-fed drive operation.

6. Rail vehicle (10) according to one of the preceding claims, **characterised in that**
the performance limitation signal (LBS) remains unconsidered during braking operation of the drive (20).

7. Retrofit set (100) for retrofitting a rail vehicle (10), which is equipped with a drive (20), an internal energy storage unit (30) and a drive control device (40), wherein the drive (20) is connected to a current collector (200) of the rail vehicle (10), which can be connected to a trackside energy supply network (210) for feeding the drive (20) with electrical energy of the energy supply network (210) for network-fed drive operation,
wherein the retrofit set (100) comprises:
- an operating element (110), which is suitable for installation in a driver's cab (11) of the rail vehicle (10) and makes it possible to set a maximum drive performance, wherein an item of performance limitation information indicating the maximum drive performance that has been set is generated by the operating element (110) and can be transmitted by means of a performance limitation signal (LBS), and
- a control logic module (120), which is embodied for integration in the drive control device (40) or in a central control device (80) of the rail vehicle (10) connected to the drive control device (40) and during operation takes into consideration the performance limitation signal (LBS) during the control of the drive (20) or forwards it to the drive control device (40) for the purpose of consideration, when an operating status signal (SS) likewise supplied to the control logic module (120) indicates internally fed drive operation, the control logic module (120) blocks the consideration or forwarding of the performance limitation signal (LBS) when the operating status signal (SS) indicates network-fed drive operation.

8. Method for operating a rail vehicle (10), which is equipped with a drive (20), an internal energy storage unit (30) and a drive control device (40), wherein
- arranged in a driver's cab (11) of the rail vehicle (10) is an operating element (110), with which a maximum drive performance of the drive (20) can be set as a function of a position set on the vehicle driver side, wherein the operating element (110) generates an item of performance limitation information indicating the maximum drive performance that has been set, which is transmitted by means of a performance limitation signal (LBS), and
- the drive performance of the drive (20) is limited by the drive control device (40) to the maximum drive performance that has been set, provided that the drive (20) is fed with electrical energy of the internal energy storage unit (30),
- the drive (20) is connected to a current collector (200) of the rail vehicle (10), which can be connected to a trackside energy supply network (210) for feeding the drive (20) with electrical energy of the energy supply network (210) for network-fed drive operation, and
- the performance limitation signal (LBS) is ignored when the drive (20) is in network-fed drive operation.

9. Method for retrofitting a rail vehicle (10), which is equipped with a drive (20), an internal energy storage unit (30) and a drive control device (40), wherein the drive (20) is connected to a current collector (200) of the rail vehicle (10), which can be connected to a trackside energy supply network (210) for feeding the drive (20) with electrical energy of the energy supply network (210) for network-fed drive operation, wherein
- an operating element (110) is installed in a driver's cab (11) of the rail vehicle (10), with which a maximum drive performance of the drive (20) can be set as a function of a position set on the vehicle driver side, wherein the operating element (110) generates an item of performance limitation information indicating the maximum drive performance that has been set, which is transmitted by means of a performance limitation signal (LBS),
- the operating element (110) is connected to the drive control device (40) or to a central control device (80) of the rail vehicle (10) from a signal perspective, and
- integrated in the drive control device (40) or the central control device (80) is a control logic module (120), which during operation takes into consideration the performance limitation signal (LBS) during the drive control or forwards it for the purpose of consideration during the drive control when an operating status signal (SS) indicates internally fed drive operation, and the control logic module (120) blocks the consideration or forwarding of the performance limitation signal (LBS) when the operating status signal (SS) indicates network-fed drive operation.

## Revendications

1. Véhicule (10) ferroviaire comprenant un entraînement (20), un accumulateur (30) interne d'énergie et un appareil (40) de commande d'entraînement, dans lequel
- dans un poste (11) de conduite du véhicule (10) ferroviaire est disposé un élément (110) de commande, par lequel il peut être réglé, de la part du conducteur du véhicule, une puissance maximum de l'entraînement (20), lorsque l'entraînement (20) est alimenté en énergie électrique de l'accumulateur (30) interne d'énergie pour un fonctionnement en entraînement alimenté de manière interne, dans lequel l'élément (110) de commande produit une information de limitation de la puissance indiquant la puissance maximum réglée de l'entraînement, information qui est transmise au moyen d'un signal (LBS) de limitation de la puissance,
- l'appareil (40) de commande de l'entraînement est conformé pour limiter la puissance de l'entraînement (20) à la puissance maximum réglée de l'entraînement,
- l'entraînement (20) est relié à un appareil (200) de prise de courant du véhicule (10) ferroviaire, qui peut être relié à un réseau (210) d'alimentation en énergie sur la voie pour l'alimentation de l'entraînement (20) en énergie électrique du réseau (210) d'alimentation en énergie pour un fonctionnement de l'entraînement alimenté par le réseau, et
- le signal (LBS) de limitation de la puissance est négligé si l'entraînement (20) se trouve dans le fonctionnement de l'entraînement alimenté par le réseau.

2. Véhicule (10) ferroviaire suivant la revendication 1, **caractérisé en ce que**
l'élément (110) de commande comprend plusieurs positions possibles, dans lequel chaque position définit une puissance maximum de l'entraînement (20) propre à la position.

3. Véhicule (10) ferroviaire suivant la revendication 2, **caractérisé en ce que**
l'élément (110) de commande prévoit une position de base, dans lequel la position de base définit la puissance maximum d'entraînement la plus petite parmi les puissances maximum d'entraînement propres à chaque position.

4. Véhicule (10) ferroviaire suivant la revendication 1, **caractérisé en ce que**
- l'élément (110) de commande est en liaison en technique du signal directement avec l'appareil (40) de commande de l'entraînement et le signal (LBS) de limitation de la puissance est traité par l'appareil (40) de commande de l'entraînement,
- il est envoyé, à l'appareil (40) de commande de l'entraînement, en outre un signal (SS) de statut de fonctionnement, qui indique si l'entraînement (20) se trouve dans le fonctionnement de l'entraînement alimenté en interne ou dans le fonctionnement de l'entraînement alimenté par le réseau, et
- une logique de commande, dans l'appareil (40) de commande de l'entraînement, tient compte du signal (LBS) de limitation de la puissance et limite la puissance de l'entraînement (20) à la puissance d'entraînement maximum réglée, si le signal (SS) de statut de fonctionnement indique le fonctionnement de l'entraînement alimenté en interne, et néglige le signal (LBS) de limitation de la puissance, si le signal (SS) de statut du fonctionnement indique le fonctionnement de l'entraînement alimenté par le réseau.

5. Véhicule (10) ferroviaire suivant la revendication 1, **caractérisé en ce qu'**
- il est monté, en amont de l'appareil (40) de commande de l'entraînement, un appareil (80) de commande central du véhicule (10) ferroviaire,
- l'élément (110) de commande est en liaison en technique du signal avec l'appareil (80) de commande central et le signal (LBS) de limitation de la puissance est traité par l'appareil (80) de commande central, et
- une logique de commande dans l'appareil (80) de commande central achemine le signal (LBS) de limitation de la puissance à l'appareil (40) de commande de l'entraînement, si un signal (SS) de statut du fonctionnement envoyé à l'appareil (80) de commande central indique le fonctionnement de l'entraînement alimenté en interne, et bloque l'acheminement du signal (LBS) de limitation de la puissance, si le signal (SS) de statut du fonctionnement indique le fonctionnement de l'entraînement alimenté par le réseau.

6. Véhicule (10) ferroviaire suivant l'une des revendications précédentes,
**caractérisé en ce que**,
dans un fonctionnement en freinage de l'entraînement (20), le signal (LBS) de limitation de puissance n'est pas pris en compte.

7. Ensemble (100) de rééquipement pour rééquiper un véhicule (10) ferroviaire, qui est équipé d'un entraînement (20), d'un accumulateur (30) interne d'énergie et d'un appareil (40) de commande de l'entraînement, dans lequel l'entraînement (20) est relié à un appareil (200) de prise du courant du véhicule (10) ferroviaire, qui peut être relié à un réseau (210) d'alimentation en énergie sur la voie pour l'alimentation de l'entraînement (20) en énergie électrique du réseau (210) d'alimentation en énergie pour un fonctionnement de l'entraînement alimenté par le réseau, dans lequel l'ensemble (100) de rééquipement comprend :
- un élément (110) de commande, qui est propre à être monté dans un poste (11) de conduite du véhicule (10) ferroviaire et qui rend possible un réglage d'une puissance maximum de l'entraînement, dans lequel il est produit par l'élément (110) de commande une information de limitation de la puissance indiquant la puissance maximum réglée de l'entraînement, information qui peut être transmise au moyen d'un signal (LBS) de limitation de la puissance, et
- un module (120) de logique de commande, qui est conformé pour être intégré dans l'appareil (40) de commande de l'entraînement ou dans un appareil (80) de commande central du véhicule (10) ferroviaire en liaison avec l'appareil (40) de commande de l'entraînement et qui prend en compte, dans le fonctionnement, le signal (LBS) de limitation de la puissance, dans la commande de l'entraînement (20) ou, en vue de cette prise en compte, l'achemine à l'appareil (40) de commande de l'entraînement, si un signal (SS) de statut de fonctionnement, envoyé également au module (120) de logique de commande, indique un fonctionnement de l'entraînement alimenté en interne, le module (120) de logique de commande bloque la prise en compte ou l'acheminement du signal (LBS) de limitation de la puissance, si le signal (SS) de statut du fonctionnement indique un fonctionnement de l'entraînement alimenté par le réseau.

8. Procédé pour faire fonctionner un véhicule (10) ferroviaire, qui est équipé d'un entraînement (20), d'un accumulateur (30) interne d'énergie et d'un appareil (40) de commande de l'entraînement, dans lequel
- dans un poste (11) de conduite du véhicule (10) ferroviaire est disposé un élément (110) de commande, par lequel il peut être réglé, par une position réglée de la part du conducteur du véhicule, une puissance maximum de l'entraînement (20), dans lequel l'élément (110) de commande produit une information de limitation de la puissance maximum indiquant la puissance maximum réglée de l'entraînement, information qui est transmise au moyen d'un signal (LBS) de limitation de la puissance, et
- par l'appareil (40) de commande de l'entraînement, la puissance de l'entraînement (20) est limitée à une puissance de l'entraînement maximum réglée pour autant que l'entraînement (20) est alimenté en énergie électrique de l'accumulateur (30) interne d'énergie,
- l'entraînement (20) est relié à un appareil (200) de prise du courant du véhicule (10) ferroviaire, qui peut être relié à un réseau (210) d'alimentation en énergie sur la voie pour l'alimentation de l'entraînement (20) en énergie électrique du réseau (210) d'alimentation en énergie pour un fonctionnement de l'entraînement alimenté par le réseau, et
- on néglige le signal (LBS) de limitation de la puissance, si l'entraînement (20) se trouve dans le fonctionnement de l'entraînement alimenté par le réseau.

9. Procédé de rééquipement d'un véhicule (10) ferroviaire, qui est équipé d'un entraînement (20), d'un accumulateur (30) interne d'énergie et d'un appareil (40) de commande de l'entraînement, dans lequel l'entraînement (20) est relié à un appareil (200) de prise du courant du véhicule (10) ferroviaire, qui peut être relié à un réseau (210) d'alimentation en énergie sur la voie pour l'alimentation de l'entraînement (20) en énergie électrique du réseau (210) d'alimentation en énergie pour un fonctionnement de l'entraînement alimenté par le réseau, dans lequel
- on monte un élément (110) de commande dans un poste (11) de conduite d'un véhicule (10) ferroviaire, par lequel, en fonction d'une position réglée de la part du conducteur du véhicule, une puissance maximum de l'entraînement (20) est réglable, dans lequel l'élément (110) de commande produit une information de limitation de la puissance indiquant la puissance maximum réglée de l'entraînement, information que l'on transmet au moyen d'un signal (LBS) de limitation de la puissance,
- on relie l'élément (110) de commande en technique du signal à l'appareil (40) de commande de l'entraînement ou à un appareil (80) de commande central du véhicule (10) ferroviaire, et
- on intègre, dans l'appareil (40) de commande de l'entraînement ou dans l'appareil (80) de commande central, un module (120) de logique de commande, qui prend en compte, dans le fonctionnement, le signal (LBS) de limitation de la puissance, lors de la commande de l'entraînement ou l'achemine en vue de la prise en compte, lors de la commande du fonctionnement, si un signal (SS) de statut du fonctionnement indique un fonctionnement de l'entraînement alimenté en interne, et le module (120) de logique de commande bloque la prise en compte ou l'acheminement du signal (LBS) de limitation de la puissance, si le signal (SS) de statut du fonctionnement indique un fonctionnement de l'entraînement alimenté par le réseau.
